# EUROPEAN PATENT SPECIFICATION

(11) **EP 2 994 977 B1**
(45) Date of publication and mention of the grant of the patent: **14.12.2016**
(21) Application number: 14721769.9
(22) Date of filing: 01.05.2014
(51) Int. Cl.: H02K 1/14, H02K 1/24, H02K 15/02

(54) **MULTI-MATERIAL ROTOR OR STATOR POLE FOR ELECTRIC MOTORS AND GENERATORS AND METHOD FOR MANUFACTURING SUCH POLES**
MULTIMATERIALROTOR- ODER STATORPOL FÜR ELEKTRISCHE MOTOREN UND GENERATOREN UND VERFAHREN ZUR HERSTELLUNG DERARTIGER POLE
PÔLE DE ROTOR OU DE STATOR MULTIMATÉRIAU POUR MOTEURS ET GÉNÉRATEURS ÉLECTRIQUES ET PROCÉDÉ DE FABRICATION DE TELS PÔLES

(30) Priority: 06.05.2013 EP 13002414
(43) Date of publication of application: 16.03.2016
(73) Proprietor: Tata Steel UK Ltd., London SW1P 4WY (GB)
(72) Inventor: CORKERY, Denis, NL-1951 JZ Velsen-Noord (NL); WOODCOCK, Mike, NL-1951 JZ Velsen-Nood (NL)
(74) Representative: Blauw, Frans Gerard
(86) International application number: PCT/EP2014/001169
(87) International publication number: WO 2014/180545

(56) References cited:
- WO-A2-2011/003718
- DE-C- 875 227
- JP-A- 2003 274 580
- JP-A- 2004 229 435
- KR-A- 20130 044 754

## Description

### Field of the invention

The invention relates to a method for manufacturing segmented rotor and stator poles or rotor or stator pole elements, for electric motors such as reluctance motors and generators.

### Background of the invention

An electric motor, such as a switched reluctance motor, has a stator with a number of stator poles with each pole having an electric coil. A rotor is provided with a number of rotor poles of a magnetic material, such as a soft magnetic material, embedded in a rotor body of a magnetic or non-magnetic material. By energizing the coils of the stator poles a torque is generated by means of which the rotor poles align with the energized stator poles. By energizing the stator poles in a specific sequence, the rotation of the rotor is maintained.

In a specific type of switched reluctance motors, known as segmental rotor switched reluctance motors, the magnetic flux only flows through each individual rotor tooth or pole. In this case, the non-magnetic material of the rotor serves to keep the rotor poles of the magnetic material isolated from each other, provides structural strength to the rotor and holds the rotor poles in place.

To keep the rotor poles of a magnetic material secured in the rotor body, recesses are provided in the rotor body such that a complementary shaped rotor pole of magnetic material can only be brought into such recess in a direction parallel to the rotation axis of the rotor. These recesses have for instance a key hole or a fir tree profile. With such recesses and complementary shaped rotor poles, the rotor poles are fixed in the radial direction.

The advantage of such construction is that the rotor poles are kept firmly in place. However, in order to do so the magnetic material of a rotor pole will extend quite a distance in the radial direction into the core of the rotor. This will result in a distribution of the magnetic flux well into the core of the rotor giving rise to a reduction in torque performance. This reduction can be substantial and will result in a motor with reduced operating efficiency.

The stator is of a similar construction to the rotor. The stator has a number of stator poles secured into the stator body by providing recesses in the stator body complementary to the shape of at least part of a stator pole. The stator poles extending into the stator body may give rise to magnetic flux losses.

In order to control eddy current losses both the rotor and stator consist of a stack of multiple thin sheet laminates, each laminate having an electrically insulating coating on both sides. The principles, as described above for an electric motor, also apply to an electrical generator.

Prior art is WO 2011/003718 A2, JP 2004229435, JP2003274580.

### Objectives of the invention

It is an objective of the present invention to provide poles for the rotor and stator of an electric motor or generator which provide improved magnetic properties.

It is another objective of the present invention to provide poles for the rotor of an electric motor or generator which provide improved mechanical properties.

It is another objective of the present invention to provide poles for the rotor of an electric motor or generator which comprise multi-material segments of both a non-magnetic and a magnetic material.

It is another objective of the present invention to provide poles for the stator of an electric motor or generator which comprise multi-material segments of different magnetic materials.

It is another objective of the present invention to provide a method for manufacturing multi-material segmented poles for the rotor and stator of an electric motor or generator.

It is another objective of the present invention to provide rotor and stator for an electric motor or generator wherein rotor and stator have segmented poles.

It is still another objective of the present invention to provide an electric motor or generator provided wherein rotor and stator have segmented poles.

### Description of the invention

The invention is a method as defined in claims 1-10.

One or more of the objectives of the invention are realized by providing a pole for a rotor or stator for an electric motor or generator wherein motor or generator comprises a rotor with a rotor body provided with a number of rotor poles and a stator with a stator body provided with a number of stator poles, wherein rotor and/or stator pole comprises a first segment of a first material and a second segment of a second material, wherein the first segment connects the pole to the rotor or stator body and wherein the second segment provides magnetic properties for the pole. By providing a segmented pole with segments of different materials it is possible to have the material with the most appropriate properties at the right location for the rotor pole and/or the stator pole. This means for the rotor pole that the first segment has suitable mechanical properties, for example high yield strength and/or fatigue strength, and the second segment has suitable isotropic magnetic properties, for example low loss at the frequency of the fluctuating magnetic field and/or high permeability. For the stator pole this means that the first segment has suitable magnetic properties, for example isotropic and low loss at the frequency of the fluctuating magnetic field and/or high permeability, and the second segment has suitable directional magnetic properties for example low loss at the frequency of the fluctuating magnetic field and/or high permeability in the direction of the magnetic flux in the direction of the magnetic flux.

It is provided that the material of the first segment of a rotor pole is a non-magnetic material and the material of the second segment of a rotor pole is a magnetic material such as electrical steel. With the rotor pole integrated in a rotor, the second segment of an electrical steel is situated at or near the outer circumference of the rotor and the first segment of a non-magnetic material between the central axis of the rotor and the second segment of an electrical steel. With such a configuration the electrical steel of the rotor pole when integrated in a rotor of an electric motor or generator is close to the poles of the stator. The remaining portion of the rotor pole, the segment of non-magnetic material extends from the second segment of electrical steel in the direction of the central axis of the rotor and serves to secure the rotor pole in the rotor body. Since this first segment is of a non-magnetic material it prevents the flow of magnetic flux distribution within the area inside the rotor core where it is counter effective to efficient operation of the motor or generator.

Is provided that the material of the first segment of a stator pole is a non-oriented electrical steel and the material of the second segment of the stator pole is a grain-oriented electrical steel. With this configuration the first segment of the stator pole is integrated in the stator body and the second segment extends from the inner wall of the stator body in the direction of the rotor. The second segment of grain-oriented steel gives the stator pole the directional magnetic properties at the location were these contribute to the efficiency of electric motor or generator. The first segment of the stator pole will form part of the stator back-iron where the magnetisation flux will go in different directions at different stages during the magnetising cycle of the stator and therefore is more advantageous to have the first segment of the stator pole made of a non-oriented electrical steel.

The second segment of the rotor pole is made from an electrical steel, for instance M270-35A, N020, or any other cold rolled grain-oriented or non-oriented magnetic steel sheet or strip.

The rotor body is made from a non-magnetic material for instance non-work-hardened austenitic stainless steel, or high-strength aluminium or titanium alloy.

The first segment of the rotor pole is also made from a non-magnetic material, for instance austenitic stainless steel Nitronic 33, or any other suitable non-magnetic structural metals. By using a non-magnetic material with high mechanical strength, the rotor pole can also be optimised to withstand the mechanical forces acting on the mechanical connection between the rotor pole and rotor body. This is of particular importance to motors and generators that operate at high rotational speeds, such as an electric motor used in a traction application for electric powered vehicles.

The first and second segments of a stator pole are made respectively from a non-oriented electrical steel such as M270-35A or NO20 and a grain-oriented electrical steel such as M110-275.

It is provided that the first segment of a rotor or stator pole is shaped complementary to a recess provided in the rotor or the stator body to retain the poles in the respective bodies. With the rotor a strong mechanical connection is realized with the first segment of non-magnetic material having a key hole or fir tree shape and the rotor body having a complementary recess to such a key hole or fir tree shape. With the stator the connection between stator pole and stator body does not need to be as strong as the connection between rotor pole and rotor body for the obvious reason that the stator is a stationary part of electric motor or generator. For that reason a simple key hole and key hole recess will be sufficient.

With the rotor or stator pole integrated in a rotor or stator the second segment is projecting at least partially from the rotor body or of the stator body. According to a further aspect the boundary between the first and second segment of a rotor or stator pole is at the circumference of rotor body or stator body.

It is preferably provided that the rotor and stator poles, like the rotor and stator body, are formed from a stack of multiple segmented laminates in order to minimise the creation of eddy currents. As in the case of the laminated rotor and stator body core, the rotor and stator pole laminates will be coated on both sides with an electrically insulating coating. The laminates of the rotor and stator poles need to be stacked together as close as possible to maximise the volume of material within the stack therefore the first and second segments of each laminate need to share the same thickness. The thickness of the laminates is in the range of 0.1 - 1.0 mm.

According to the invention a method for manufacturing a pole for a rotor or stator for an electric motor or generator is provided wherein the motor or generator comprises a rotor with a rotor body provided with a number of rotor poles and a stator with a stator body provided with a number of stator poles, wherein the method comprises the steps of:
- providing a strip of a first material and a strip of a second material,
- joining the strips with edges of the strips against each other, and
- cutting pole laminates from the joined strips.

After cutting rotor or stator pole laminates from the joined strips these pole laminates are integrated with the laminates of a rotor or stator body by inserting them into the complementary shaped recesses in the rotor or stator body laminates, after which the integrated laminates of rotor or stator body and rotor or stator poles are stacked to form a rotor or stator thereby. The first segments of the rotor or stator pole laminates and the corresponding part in the rotor or stator body laminates have complementary shapes such that these in combination form retaining means by which the rotor or stator pole segments are locked into the rotor or stator layer.

An alternative method of manufacturing a rotor or stator pole for a rotor or a stator for an electric machine consists of layering the cut pole laminates and joining them (either through means of bonding, welding or interlocking) to form a multi-laminate rotor or stator pole stack. The rotor or stator pole stack will subsequently be integrated with a multi-laminate rotor or stator body core by inserting a number of these pole stacks in the complementary shaped recesses in the rotor or stator body, thereby constituting a rotor or stator body assembly. The first segments of the rotor and stator pole laminates and the corresponding part in the rotor, or stator body have complementary shapes such that these in combination form retaining means by which the rotor and stator pole segments are locked in the rotor and stator body respectively.

According to the invention it is provided that the first and second materials are a non-magnetic material and an electrical steel for a rotor pole and a non-oriented electrical steel and a grain-oriented electrical steel for a stator pole.

According to a further aspect of the invention it is provided that at least three strips are joined with a strip of the second material on both sides of a strip of the first material. This setup takes account of the fact that the geometry of the rotor or stator pole laminate is such that the second segment will have in most cases the greatest width, whereas the first segment, because of the position it will take in the rotor or stator body, will most often have a smaller width. This is definitely so where the first segment has a fir tree shape. With the three strips joined in this way each subsequent rotor or stator pole laminate is cut from the joined strips in an orientation that is 180° rotated in the plane of the joined strips with respect to the preceding rotor or stator pole laminate.

Especially for the rotor poles the manner in which the different strips are joined is important since it determines the strength of the joint and therewith the maximum speed at which the motor or generator can be operated. For that reason it is provided that the strips are joined by means of electron beam welding or laser welding.

According to a further aspect of the invention the method comprises that the strip of non-magnetic metal is provided on both sides with an electrically insulating coating. Just like the elements of the rotor body the segment of non-magnetic material has to be provided with an electrically insulating coating to minimise the creation of eddy currents. The electrically insulating coating can be applied on the sheet material from which the strip of non-magnetic material is cut or it could be applied later on in the manufacturing of the rotor pole laminate. If the coating is applied later on it is preferably applied after welding the strips to each other.

Since the welding of the strips could result in residual stresses in the strips it is further provided that the method comprises that the joined strips are submitted to an annealing process. If it is necessary to carry out such an annealing step, and depending on the properties of the electrically insulating coating, the application of such electrically insulating coating could also be executed after annealing the strips.

The cutting of rotor or stator pole laminate from the joined strips can be carried out by means of laser cutting, water jet cutting, electrical discharge machining or stamping. For high volume production, stamping is the method of choice.

Also provide is a rotor and stator for an electric motor or generator, wherein the rotor and stator comprises respectively a rotor and stator body with the respective rotor and stator poles according to the invention, and an electric motor or generator provided with a rotor and stator wherein the rotor comprises a rotor body and rotor poles and a stator body and stator poles according to the invention.

### Brief description of the drawings

The invention will be further explained on hand of the example shown in the drawing, in which:
fig. 1 shows a schematic view of two joined strips with an outline of rotor pole laminates to be cut out of the joined strips;
fig. 2 shows a schematic view of three joined strips with an outline of rotor pole laminates to be cut out of the joined strips;
fig. 3 shows a schematic view of a rotor body and a number of rotor poles, and
fig. 4 shows a schematic view of a stack of rotor pole laminates.

### Detailed description of the drawings

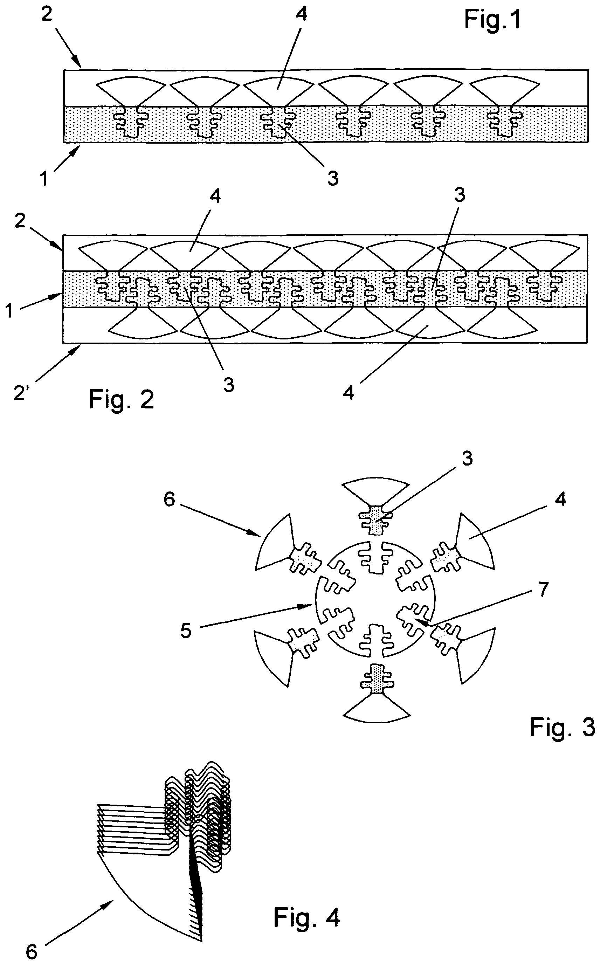

Fig.1 shows schematically a strip of a non-magnetic material 1 joined with a strip of an electrical steel 2 if it concerns rotor poles. In case of stator poles these strips 1, 2 would respectively be of a non-oriented electrical steel and a grain-oriented steel. The strip of a non-magnetic material 1 could also be made from another metal than steel, for example from aluminium.

Individual laminates for a rotor pole are outlined on the strips 1, 2, wherein the first segment 3 of a laminate lies within the boundaries of strip 1 of a non-magnetic material and the second segment 4 within the boundaries of strip 2 of an electrical steel.

The profile of segment 3 is fir tree shaped or similar and corresponds to recesses in the rotor core body in to which the rotor poles should fit. In case of a stator pole the profile of the equivalent segment and the associated recess in the stator body can be of a more straightforward shape since there will be almost no load on the connection between stator pole and stator body.

The strips 1 and 2 are seam welded along the length of the strips, for instance by laser welding or electron beam welding to be assured to obtain a reliable weld along the total length of strips 1, 2 and therewith between segments 3 and 4 of all rotor or stator pole laminates as the case may be.

In Fig. 2 three strips 1, 2 and 2' are joined with the middle strip being a non-magnetic material 1 and on both sides thereof a strip of an electrical steel 2 and 2' for rotor poles. In case of stator poles these strips 1, 2 and 2' would respectively be a middle strip of a non-oriented electrical steel and on both sides thereof a grain-oriented electrical steel. With segment 4 of a rotor or stator pole laminate having a larger width than the width of segment 3 this set-up with three strips allows for a higher rate of material utilisation.

Fig. 3 shows schematically a rotor core body 5 and rotor poles 6 that are to be inserted in recesses 7 in the rotor body 5. The recesses 7 have a shape complementary to the profile of segment 3 of a rotor pole. A rotor can be assembled by inserting rotor pole laminate 6 in a rotor body laminate and stacking the obtained laminates to a complete rotor. Another method is to stack the rotor body laminates and rotor pole laminates separately and then insert the stacked rotor poles in the stacked rotor body.

For a stator the construction will be similar to a large extent be it that the stator body will roughly have an annular shape with a circular inner wall with the recesses opening into the space within the stator body.

Fig. 4 shows schematically a stack of a number of rotor or stator pole laminates. Before inserting these in the rotor body these laminates are bonded together which can be carried out by gluing or welding.

## Claims

1. Method for manufacturing a pole for a rotor or stator for an electric motor or generator wherein the motor or generator comprises a rotor with a rotor body provided with a number of rotor poles (6) and a stator with a stator body provided with a number of stator poles, **characterized in that** the method comprises the steps of:
- providing a strip (1) of a first material and a strip (2) of a second material,
- joining the strips (1,2) with edges of the strips against each other, and
- cutting pole laminates (3,4) from the joined strips,
wherein the first and second material are respectively a non-magnetic material and an electrical steel for a rotor pole (6) and respectively a non-oriented electrical steel and a grain-oriented electrical steel for a stator pole.

2. Method according to claim 1, wherein three strips (1,2,2') are joined with a strip (2,2') of the second material on both sides of a strip (1) of the first material.

3. Method according to claim 1 or 2, wherein the strips (1,2) are joined by means of electron beam welding or laser welding.

4. Method according to one or more of claims 1-3, wherein the strip of a non-magnetic material is provided with an electrically insulating coating.

5. Method according to one or more of claims 1-4, wherein the joined strips are submitted to an annealing process.

6. Method according to one or more of claims 1-5, wherein the pole laminates are cut from joined strips by means of stamping.

7. Method according to one or more of claims 1-6, wherein a first segment (3) of the first material of a pole is shaped complementary to a recess (7) provided in the rotor or stator body to retain the pole in the rotor or stator body.

8. Method according to one or more of claims 1-7, wherein the first segment (3) of a pole has a fir tree shape.

9. Method according to one or more of claims 1-8, wherein with the rotor or stator pole integrated in a rotor or stator a second segment (4) of the second material is projecting at least partially from the rotor body (5) or of the stator body.

10. Method according to one or more of claims 1-9, wherein the pole is made up of a stack of multiple segmented laminates.

## Patentansprüche

1. Verfahren zur Herstellung eines Pols für einen Rotor oder Stator für einen Elektromotor oder Generator, wobei der Motor oder Generator einen Rotor mit einem mit einer Anzahl Rotorpole (6) versehenen Rotorkörper und einen Stator mit einem mit einer Anzahl Statorpole versehenen Statorkörper aufweist, **dadurch gekennzeichnet, dass** das Verfahren folgende Schritte umfasst:
- Bereitstellen eines Streifens (1) eines ersten Werkstoffs und eines Streifens (2) eines zweiten Werkstoffs,
- Verbinden der Streifen (1, 2) mit Kanten der Streifen aneinander und
- Ausschneiden von Polschichten (3, 4) aus den verbundenen Streifen,
wobei der erste und zweite Werkstoff jeweils ein unmagnetischer Werkstoff und ein Elektrostahl für einen Rotorpol (6) und jeweils ein nichtorientierter Elektrostahl und ein kornorientierter Elektrostahl für einen Statorpol sind.

2. Verfahren nach Anspruch 1, wobei drei Streifen (1, 2, 2') mit einem Streifen (2, 2') des zweiten Werkstoffs an beiden Seiten eines Streifens (1) des ersten Werkstoffs verbunden werden.

3. Verfahren nach Anspruch 1 oder 2, wobei die Streifen (1, 2) mittels Elektronenstrahlschweißen oder Laserschweißen verbunden werden.

4. Verfahren nach einem oder mehreren der Ansprüche 1-3, wobei der Streifen eines unmagnetischen Werkstoffs mit einer elektrisch isolierenden Schicht versehen wird.

5. Verfahren nach einem oder mehreren der Ansprüche 1-4, wobei die verbundenen Streifen einem Glühprozess zugeführt werden.

6. Verfahren nach einem oder mehreren der Ansprüche 1-5, wobei die Polschichten aus verbundenen Streifen mittels Stanzen ausgeschnitten werden.

7. Verfahren nach einem oder mehreren der Ansprüche 1-6, wobei ein erstes Segment (3) des ersten Werkstoffs eines Pols komplementär zu einer Aussparung (7) geformt ist, die im Rotor- oder Statorkörper vorgesehen ist, um den Pol im Rotor- oder Statorkörper zu halten.

8. Verfahren nach einem oder mehreren der Ansprüche 1-7, wobei das erste Segment (3) eines Pols eine Tannenbaumform hat.

9. Verfahren nach einem oder mehreren der Ansprüche 1-8, wobei mit dem Rotor- oder Statorpol in einem Rotor oder Stator integriert ein zweites Segment (4) des zweiten Werkstoffs zumindest teilweise aus dem Rotorkörper (5) oder vom Statorkörper hervorsteht.

10. Verfahren nach einem oder mehreren der Ansprüche 1-9, wobei der Pol aus einem Paket aus mehreren segmentierten Schichten zusammengesetzt wird.

## Revendications

1. Méthode de fabrication d'un pôle de rotor ou de stator pour un moteur ou un générateur électrique, le moteur ou le générateur comprenant un rotor avec un corps de rotor muni d'un certain nombre de pôles de rotor (6) et d'un stator avec un corps de stator muni d'un certain nombre de pôles de stator, **caractérisée en ce que** la méthode comprend les étapes suivantes :
- fourniture d'une bande (1) d'un premier matériau et d'une bande (2) d'un deuxième matériau,
- jonction des bandes (1, 2) en plaçant les bords des bandes d'un contre l'autre, et
- coupe de stratifiés à pôle (3, 4) des bandes jointes,
le premier et le deuxième matériau étant respectivement un matériau non magnétique et un acier électrique pour un pôle de rotor (6) et respectivement un acier électrique non orienté et un acier électrique à grains orientés pour un pôle de stator.

2. Méthode selon la revendication 1, les trois bandes (1, 2, 2') étant jointes avec une bande (2, 2') du deuxième matériau sur les deux côtés d'une bande (1) du premier matériau.

3. Méthode selon la revendication 1 ou 2, les bandes (1, 2) étant jointes par soudage par faisceau d'électrons ou au laser.

4. Méthode selon une ou plusieurs des revendications 1 à 3, la bande d'un matériau non magnétique étant dotée d'un revêtement isolant électriquement.

5. Méthode selon une ou plusieurs des revendications 1 à 4, les bandes jointes étant soumises à un traitement de recuit.

6. Méthode selon une ou plusieurs des revendications 1 à 5, les stratifiés de pôle étant coupés dans des bandes jointes par estampage.

7. Méthode selon une ou plusieurs des revendications 1 à 6, un premier segment (3) du premier matériau d'un pôle étant façonné de façon complémentaire à un évidement (7) pratiqué dans le corps du rotor ou du stator de façon à maintenir le pôle dans le corps du rotor ou du stator.

8. Méthode selon une ou plusieurs des revendications 1 à 7, le premier segment (3) d'un pôle étant en forme de sapin.

9. Méthode selon une ou plusieurs des revendications 1 à 8, avec le pôle de rotor ou de stator intégré dans un rotor ou un stator, un deuxième segment (4) du deuxième matériau fait saillie, au moins partiellement, du corps du rotor (5) ou du corps du stator.

10. Méthode selon une ou plusieurs des revendications 1 à 9, le pôle étant composé d'un empilement de multiples stratifiés segmentés.
